# EUROPEAN PATENT SPECIFICATION

(11) **EP 2 937 063 B1**
(45) Date of publication and mention of the grant of the patent: **08.08.2018**
(21) Application number: 15161745.3
(22) Date of filing: 30.03.2015
(51) Int. Cl.: A61C 19/06, A61J 1/03, B65D 75/32

(54) **AN INDICATOR LIQUID CONTAINER FOR THE DENTAL PRACTICE**
INDIKATORFLÜSSIGKEITSBEHÄLTER FÜR ZAHNARZTPRAXIS
RÉCIPIENT DE LIQUIDE À INDICATEUR POUR LE CABINET DENTAIRE

(30) Priority: 26.04.2014 NL 2012699
(43) Date of publication of application: 28.10.2015
(73) Proprietor: Dentalcolors B.V., 7547 AS Enschede (NL)
(72) Inventor: Ankoné, William, Gerard, Maria, 7512 EK Enschede (NL)
(74) Representative: Patentwerk B.V.

(56) References cited:
- WO-A1-88/05748
- JP-A- H10 120 041
- US-A- 5 106 297
- US-A- 5 240 415

## Description

The invention relates to an indicator liquid container for the dental practice.

More particularly, the invention relates to an indicator liquid container for indicator liquids for indicating caries or dental plaque.

Until now, such indicator liquids are supplied to the end user, for example the dentist, dentist's assistant, dental hygienist or dental specialist, in closable storage bottles and the like. A drawback of such storage bottles is the fact that, after first use, they are no longer sterile, at least no longer hygienic, while the indicator liquids are used orally with the patients of the respective end user. In addition, with such storage bottles, the contents have to be transferred to a smaller container, such as a dappen glass, into which a separate applicator, such as a small brush, is then dipped. This applicator is subsequently used in the mouth of the patient on the respective spots of the dental elements. Depending on the indicator liquid used, undesired matter, such as caries or dental plaque, may be coloured. The patient may then be treated, in which case indicator liquid may be used again to check if the undesired matter was removed. This may be repeated for as long as necessary or desired.

The remainder of the contents of the small container is then disposed of or, in the worst case, poured back into the storage bottle. The latter carries the risk of contamination of the liquid and the risk of cross contamination between patients.

Further drawbacks of the use of a storage bottle and transferring the contents thereof are that this may often result in spilling of the respective indicator liquids and that many operations are required before the indicator liquid is ready for use.

There are only limited alternatives in the literature in the field of dental indicator liquids. Thus, European patent application EP1103230 shows a cuvette with an applicator for binding agent or bonding. This solution is relatively difficult to manufacture and is, in addition, susceptible to contamination.

As indicator liquids should, for several reasons, both hygienic and economic, be used as sparsely as possible, this solution is no practical alternative for indicator liquids.

Another alternative is proposed in European patent application EP1336386. This document shows a card having a fold line through a liquid chamber. A film/foil is attached to card. By folding the card, an applicator is dipped into the liquid, after which the film/foil has to be removed in order to be able to use the applicator.

Folding the card and subsequently peeling off the film/foil results in a complicated arrangement which is susceptible to contamination, due to the applicator protruding outside the film/foil. During folding, liquid may squirt out, which is highly undesirable for indicator liquids which are being used in the vicinity of patients and/or practitioners. Thus, this document does not provide a practical solution for using indicator liquids with dental treatments.

A further alternative container is proposed in US patent application US2002/0027088. In this document, a brush and a medium with a medicinal liquid are held in a packaging plate and covered by a film/foil. By applying a force thereto, the medium may take the liquid to the brush, after which the brush with the liquid can be pulled out of the packaging and used, without the film/foil of the plate being removed.

A first drawback with this application is that the brush cannot be dipped into the liquid a second time after it has been taken out of the packaging. As a result thereof, the brush can only be used once, which is particularly inconvenient when it is being used with indicators for dental plaque and/or caries.

A second drawback is that the packaging cannot be put down due to the fact that it can only be used once. As a result of the round central recesses, the container of the medium with the liquid cannot be positioned substantially horizontally. Since the film/foil is not removed, there is no need to do this with the solution as described in this document.

A third drawback is that it is difficult to keep the brush hygienic, because the brush handle sticks out of the packaging. Thus, bacteria, spores or fungi can enter the packaging, as far as the hairs of the brush.

In addition, the brush cannot be placed on the container, because the latter cannot be placed in a stable position and no room is provided for the brush. Thus, this container is not suitable or intended for use with indicator liquids for the dental practice.

Another alternative is described in US patent US5240415. This document describes a system for bleaching teeth. This system has a packaging plate containing recesses for a small bottle, a spatula and an abrasive. The liquid containing the abrasive in the bottle is mixed to form a paste using the spatula and applied to the teeth. This system does not comprise a brush and is not suitable for applying indicator liquid to dental elements.

US patent US6105761 shows a container for a liquid binding agent, a so-called dental bonding, for use in a dental practice. This consists of a brush, which is partly situated in a packaging, and a reservoir containing a liquid. The packaging comprises a bottom plate which is provided with recesses and a covering film/foil. This container cannot be put down safely and the brush cannot be dipped into the liquid again. In addition, the handle again projects from the packaging in this case as well. Moreover, the brush cannot be placed on the container, because the latter is not sufficiently stable and no space is provided for the brush. In addition, there is no mention of applying a dental indicator liquid and the system is thus not suitable for that purpose.

A further alternative that is found in a distinct and remote technical field is presented in the Japanese patent application JP-10120041. This document describes an applicator for the application of a liquid medicin. Typical draw backs of the technology, presented herein is the impossibility to take out the applicator from its packaging without touching the application area, leading to potential contamination. Furthermore, the stability of the packaging is low, such that a multiple use of this device is impractical.

Another alternative is described in German patent application DE100230853. This document presents another solution for a liquid binding agent or dental bonding, in which the brush cannot be dipped into the liquid more than once and in which the handle protrudes from the packaging. In addition, the brush cannot be placed on the container, as no space is provided for the brush. The use as an application for dental indicator liquids is not described and it is thus not suitable for that purpose.

Therefore, it is an object of the invention to provide an indicator liquid container which does not have the abovementioned and/or other drawbacks or at least partly eliminates them, while at least partly retaining the advantages thereof. It is a further object of the invention to provide a container for indicator liquids which is convenient, quick to use, hygienic or sterile, relatively inexpensive, can prevent spilling, can rest on a surface in a stable manner and can prevent excessive use of indicator liquid.

At least one of these and/or other objects is achieved by an indicator liquid container with the features of claim 1. By integrating the stick-shaped brush, stick, brush or the applicator into the container, the respective dentist, dental hygienist, dental assistant or dental specialist, for example, is able to use the indicator liquid directly, without having to transfer it or spilling it, flexibly and, if necessary, in a sterile way, by removing the covering film/foil. By setting the metering of the liquid beforehand, during production of the container, excessive use can be prevented.

Since the stick does not protrude beyond the lateral edge, the covering film/foil is able to seal the entire recessed chamber, as well as the brush, stick or the applicator. As a result thereof, it is possible to ensure hygienic and/or sterile conditions and to prevent contamination.

As the indicator in the recessed chamber is held in an open medium, it is possible to prevent the indicator from escaping from the recessed chamber when opening the film/foil and during use.

By using this open medium, it is thus possible to prevent spillage and undesired flowing out of the indicator liquid held in the open medium. This makes it even easier to achieve practical use without staining and spilling. The volume of the container and/or of the recessed chamber may be small, such as for example approximately 1 cm³ or even much less.

Since the stick-shaped brush, small stick or the applicator can be removed from and replaced into the indication liquid container multiple times, the recess for the tip of a finger and a thumb or other finger is of great practical value. In the prior-art solutions, such a multiple use with one and the same patient is not possible. The downwardly directed edge around the outer edge of the plastic plate provides sufficient stability to prevent the indicator liquid container from toppling or falling over.

This aspect is also absent from the prior-art containers, since all these solutions are only intended for single use. The combination of the downwardly directed edge which allows stable positioning, the recess for inserting the tips of one or more fingers and/or the thumb and the open medium make it possible to use the container several times with one and the same patient.

The stick-shaped brush, small stick or the applicator may comprise a receiving part for holding and releasing the indicator liquid at a suitable location in the mouth of a patient. By means of this receiving part, the indicator liquid can be passed from the recessed chamber to the suitable locations in the mouth of a respective patient. The receiving part may comprise an open medium, such as a sponge-like material, foam, paper, felt or hairs, such as occur on a brush or cotton bud.

The bottom surface of the recessed chamber may comprise a tooth or needle. This tooth or needle may penetrate a wall of a liquid ampoule which is arranged in the vicinity of the tooth or needle and situated in or underneath the open medium, if a force is exerted on the open medium and/or on the ampoule. As a result thereof, the indicator liquid/the indicator medium may be sealed off from the environment still further. As a result thereof, it may be possible to increase the storage life of the indicator medium and/or the indicator liquid.

Thus, the needle or tooth may be configured so as to be able to penetrate the wall of the ampoule after pressure has been exerted on the receiving medium and/or the ampoule. A surface may be provided on the plastic plate, on which adhesion of the covering film/foil is greatly reduced. As a result thereof, it is easier for the user, such as a dentist, dental hygienist or dental assistant, to pull the covering film/foil from the plate without using too much force, so that the indicator liquid and applicator can be used without having to perform any further operation.

The indicator liquid container may comprise a colour code which indicates which indicator liquid is in the indicator liquid container. This makes it difficult for a treating specialist to make a mistake with regard to the type of indicator liquid and its application. In this case, each colour may, for example, correspond to the colour of the respective indicator liquid in the container and/or the colour of the stick-shaped brush, stick, brush or the applicator.

The groove in which the stick-shaped brush, small stick or the applicator is situated may be less deep with respect to the plate than the space for receiving the tip of a first finger and the tip of a second finger or thumb, so that the tips of fingers and/or thumb can engage around the stick-shaped brush, small stick or the applicator. This makes removing and replacing the stick-shaped brush, small stick or the applicator easier and more user-friendly. With respect to the plate, the space for receiving the tip of a first finger and the tip of a second finger or thumb may be at least 3 mm deeper than the groove. This distance is just sufficient to lightly engage around the stick-shaped brush, stick, brush or the applicator using the finger tips.

The invention will be explained in more detail by means of containers which are illustrated in the figures, in which:
- Fig. 1 shows a diagrammatic perspective view of an indicator liquid container as information useful for understanding the invention,
- Fig. 2 shows a diagrammatic perspective view of an indicator liquid container as information useful for understanding the invention,
- Fig. 3 shows a diagrammatic perspective view of an indicator liquid container as information useful for understanding the invention,
- Fig. 4 shows a diagrammatic perspective view of an indicator liquid container as information useful for understanding the invention,
- Fig. 5 shows a diagrammatic perspective view of an indicator liquid container as information useful for understanding the invention,
- Fig. 6 shows a diagrammatic perspective view of an indicator liquid container as information useful for understanding the invention,
- Fig. 7 shows a diagrammatic perspective view of an indicator liquid container as information useful for understanding the invention, and
- Fig. 8 shows a diagrammatic perspective bottom view of the embodiment as illustrated in Fig. 7.

It should be noted that the figures are only diagrammatic illustrations of preferred embodiments of the invention. The figures should by no means be seen as limiting the invention. In the figures, identical or similar parts are denoted by the same reference numerals.

The expressions "indication, indicator, indicator liquid, indicator medium, detection and/or detector" which are used in the present specification and/or the claims, are to be understood as relating to, but by no means being limited to, rendering a substance, fabric or matter visible which is difficult or hard to see or not visible at all. This process of rendering something visible may be effected by colouring the matter, the fabric or the substance by causing a reaction with the matter, the fabric or the substance to be made visible, resulting in a colouring or discolouration, or by making a colorant, a substance which is fluorescent or phosphorescent, adhere to the matter, the fabric or the substance to be made visible.

The expression "dentist and dental practice" which is used in the present specification and/or the claims, is to be interpreted as referring to, but is by no means limited to, the dentist himself or herself, his or her assistants, dental hygienists, prevention staff, dental surgeons, dental specialists, dental assistants, dental technicians, dental prosthethists, and/or any other professions supporting dentists.

The expression "to allow access for the tip of a finger and the tip of a thumb or another finger to this space" which is used in this specification and/or the claims, is to be understood as referring to, but is by no means limited to, a space and/or a recess which allows a space of at least 8 mm between a wall and the part to be removed from the recess, so that a finger tip or a tip of a thumb can at least partly be inserted therein. Preferably, a space of 8 mm is provided on either side of the part to be removed, so that there is sufficient space for the tip of a finger and the tip of a thumb to be inserted into the recess for a few millimetres in order to be able to grasp the part to be removed sufficiently firmly.

The expression "open medium" which is used in this specification and/or the claims is to be interpreted as referring to, but is by no means limited to, a medium comprising sponge-like, woolly, hairy, felt-like, fluffy and/or otherwise open matter, suitable and intended for absorbing a liquid which may behave like a kind of inkpad, that is to say, which dispenses a sufficient amount of indicator liquid when being pushed/touched to then apply in the mouth of the patient.

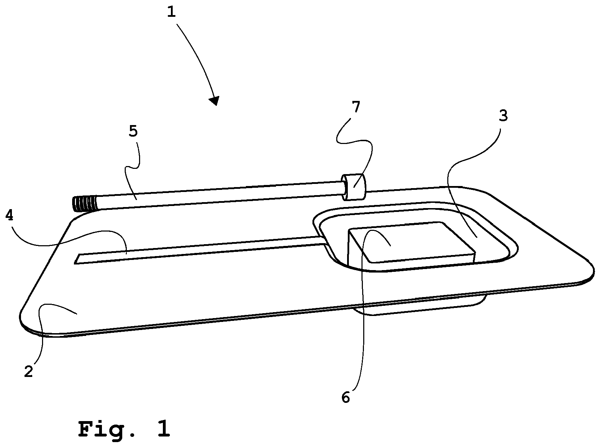

Fig. 1 shows a diagrammatic perspective view of an indicator liquid container 1. In this figure, a recessed chamber 3 is provided in a plastic plate 2. The recessed chamber 3 contains an open medium 6, such as for example a sponge-like material, which material may have absorbed an indicator liquid. The plastic plate 2 is provided with a groove 4 into which the handle of a brush, stick or an applicator 5 fits. The applicator 5 may comprise a receiving part 7. This receiving part 7 may comprise a set of hairs, such as in a brush, or may comprise an open medium. This part may also comprise flocked hairs. By means of the open medium or the hairs, the applicator or the brush or stick 5 is able to transfer some of the indicator liquid from the recessed chamber 3 and/or from the open medium 6 to the respective locations on the teeth of the patient.

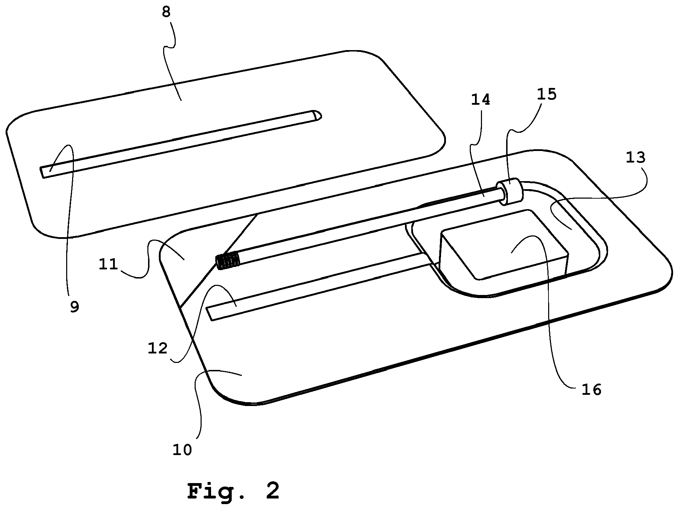

This figure shows that an applicator 5 with the handle does not extend beyond a lateral edge of the plastic plate 2. As a result thereof, a covering film/foil 8 can seal the recessed chamber 3 and the applicator 14 or the stick or brush 5 substantially along the entire periphery of the plastic plate, as is illustrated in Fig. 2. Therefore, the assembly can optionally be sterilised, as a result of which the indicator liquid and the applicator 14 or the stick or brush 5 can remain sterile, until the respective dentist, assistant or dental hygienist removes or opens the covering film/foil of the plate 10.

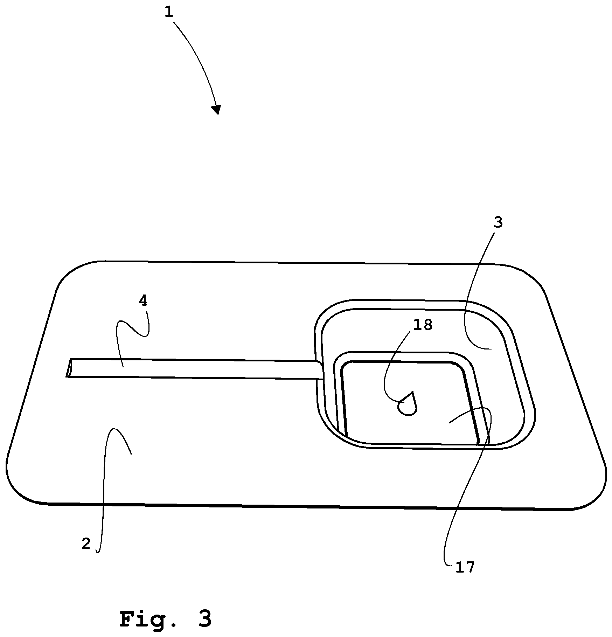

In an alternative as illustrated in Fig. 3, a tooth or needle 18 is situated in the bottom surface 17 of the recessed chamber 3. This tooth or needle 18 is configured in such a way that it can penetrate a wall of an ampoule 20. As a result thereof, a liquid which is present in the ampoule can be released after pressure has been exerted on the open medium 6 and/or on the ampoule 20 and be absorbed by the open medium 6. In such an embodiment, an indicator may be provided in the open medium, for example in solid form, and is optionally only dissolved into the liquid flowing from the ampoule and/or activated shortly before being used therein. This makes it possible to greatly increase the storage life of the indicator liquid.

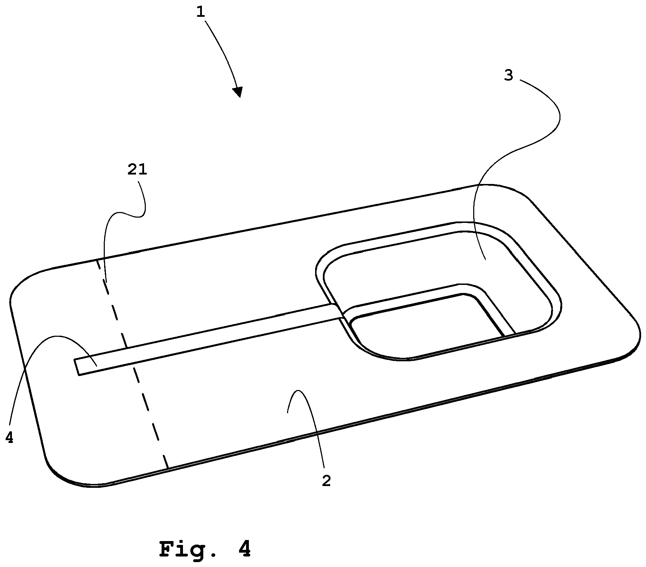

Fig. 4 shows a container which has a breaking edge 21 in the plastic plate 2. This breaking edge 21 may facilitate opening of the indicator liquid container 1 and/or removal of the covering film/foil 8.

It should be noted that it is for example also possible for the breaking edge 21 to run through the groove 4 and/or a part of the recessed chamber 3 instead of only through plate 2.

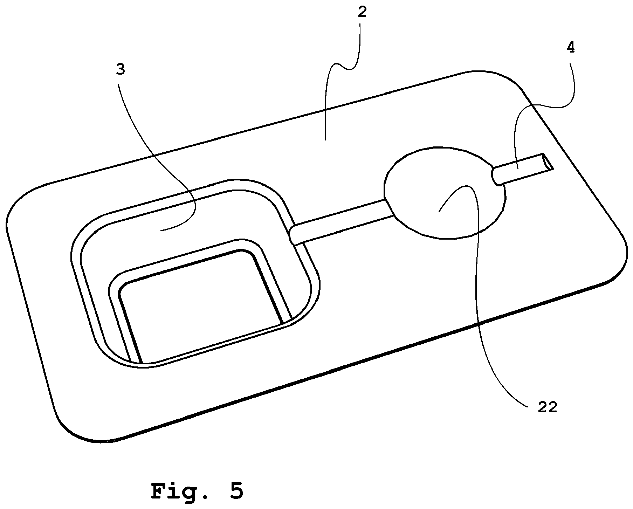

In Fig. 5, at the location of the handle of the applicator, the container comprises a recess 22 which has such dimensions that the tips of a finger and of a thumb can reach beyond the upper edge of the plate 2 on either side of the handle of the applicator 5,14, so that the applicator 5,14 can be removed simply and efficiently from groove 4.

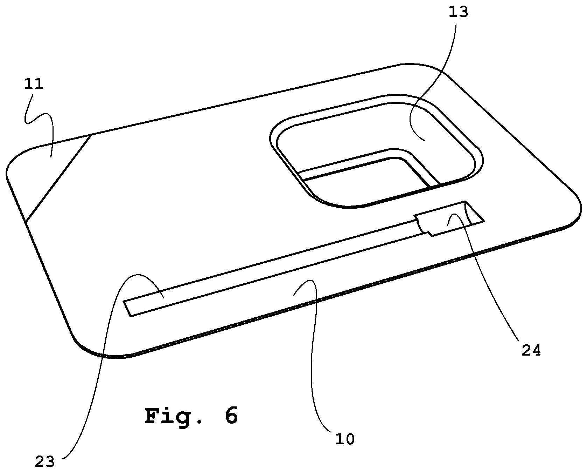

In Fig. 6, the groove 23 is arranged at a distance from the recessed chamber 13, in such a way that the recess 24, into which the receiving part 7 of the applicator 5,14 can be accommodated, is not in communication with the recessed chamber 13. As a result thereof, it is possible to keep the applicator 5,14 separate from media in the recessed chamber 13 during transportation and storage until the moment the covering film/foil 8 is opened. In the case of, for example, aggressive media, this makes it possible to keep the receiving part 7 of the applicator 5,14 separate from the liquid, thus increasing the storage life of the indicator liquid container 1 as a whole.

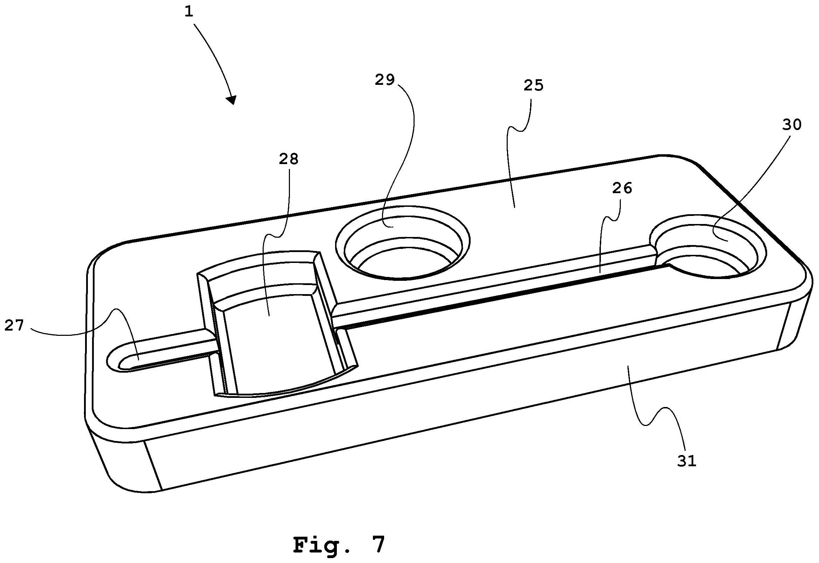

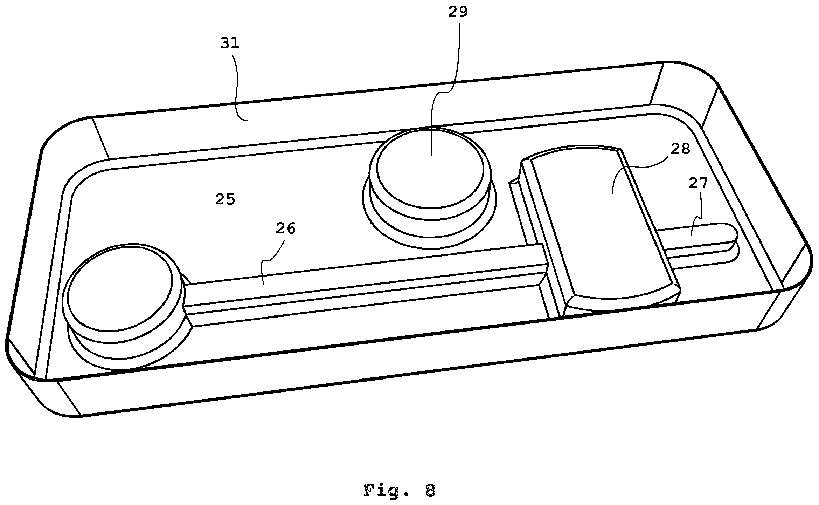

Figs 7 and 8 show an indication liquid container 1 which comprises a packaging plate 25 having a groove 26 for holding an applicator, in which a space 28 is provided for receiving a finger and thumb in the packaging plate in order to be able to easily grasp the applicator, a space for the indicator 29 and a recess 30 for the receiving part of the applicator. The plate 25 is surrounded by an edge 31 which is substantially at right angles to the plate. The edge 31 is slightly deeper than the recesses 28, 29 and 30, so that the container can be placed on the edge in a substantially stable manner.

Thus, the container 1 can be set down, the covering film/foil can be removed and the indication liquid can be removed from the recess 29 and applied to the respective locations on the teeth in the mouth of a patient with the applicator 5,14. If caries is for example detected on any respective location by means of the indicator, the respective treating dentist can replace the applicator 5,14 on the container 1, remove further tooth material and then apply some more indicator by means of the applicator 5,14. Thus, it is possible to use one separate indicator container 1 for each patient and re-use the same a few times during the treatment of said respective patient. As a result thereof, optimum hygiene is combined with optimum ease of use.

In the illustrative containers, the plastic plate 2 has a rounded rectangular shape. However, it is also possible to use various other shapes, such as square, oval, triangular, round, polygonal, etc. The same applies to the recessed chamber 13, which may also be round, triangular, oval, polygonal, etc. The applicator 5,14 is configured as a round stick, but may also be any other shape.

Such and other variants will be clear to the person skilled in the art and are deemed to be within the scope of the invention as defined in the following claims.

### List of reference numerals

- 1.: Indicator liquid container
- 2.: Plate
- 3.: Recessed chamber
- 4.: Groove
- 5.: Applicator
- 6.: Open medium
- 7.: Receiving part
- 8.: Covering film/foil
- 9.: Space
- 10.: Plate
- 11.: Surface
- 12.: Groove
- 13.: Recessed chamber
- 14.: Applicator
- 15.: Receiving part
- 16.: Open medium
- 17.: Bottom surface
- 18.: Needle or tooth
- 19.: Space
- 20.: Ampoule
- 21.: Breaking edge
- 22.: Recess
- 23.: Groove
- 24.: Recess
- 25.: Plate
- 26.: Groove
- 27.: Groove
- 28.: Space
- 29.: Storage space
- 30.: Recess
- 31.: Edge

## Claims

1. Indicator liquid container (1)
- containing indicator liquids for the dental practice, to indicate caries or dental plaque, in which the container:
- comprises a plastic plate (2) with a chamber (3) recessed into it for containing an indicator liquid and
- comprises a covering film/foil (8) which can be attached to the plastic plate (2), in which the indicator liquid container (1)
- comprises a small stick, a stick-shaped brush or a stick-shaped applicator (5) and
- a groove (4) provided in the plastic plate (2) for accommodating the small stick, stick-shaped brush or the applicator (5), in which the small stick, stick-shaped brush or the applicator (5,14) do not reach beyond a lateral edge of the plastic plate (2) in the closed position,
- in which an open medium (6) is provided in the recessed chamber (3),
- in which a recessed space (28) is provided around the groove (4) in the plastic plate (2) and is suitable for allowing access for the tip of a finger and the tip of a thumb or another finger to this space (28), and
- in which a downwardly directed edge (31) is provided along the outer edge of the plastic plate (2) and extends as far or further than the depth of the recesses (28, 29 and 30).

2. Indicator liquid container (1) according to Claim 1, in which the stick-shaped brush, small stick or the applicator (5,14) comprises a receiving part (7,15).

3. Indicator liquid container (1) according to Claim 2, in which the stick-shaped brush, small stick or the applicator (5,14) comprises a microbrush or cotton bud.

4. Indicator liquid container (1) according to Claim 2, in which the stick-shaped brush, small stick or the applicator (5,14) comprises a sponge-like or other receiving medium (16).

5. Indicator liquid container (1) according to one of the preceding claims, in which the bottom surface (17) of the recessed chamber (3) comprises a tooth or needle (18) and in which a liquid ampoule (20) is arranged in the vicinity of the tooth or needle (18) and situated in or underneath the open medium (6).

6. Indicator liquid container (1) according to Claim 5, in which the needle or tooth (18) is configured so as to be able to penetrate the wall of the ampoule (20), for example such that the needle or tooth opens the ampoule (20) after pressure has been exerted on the receiving medium (6,16) and/or the ampoule (20).

7. Indicator liquid container (1) according to one of the preceding claims, in which a surface (11) is provided on the plastic plate (2), on which adhesion of the covering film/foil (8) is greatly reduced.

8. Indicator liquid container (1) according to one of the preceding claims, in which the indicator liquid comprises a caries indicator or a dental plaque-indicator, in which the indicator liquid comprises one or more of the following components: rhodamine B or acid red 52 in, for example, a glycol solution or in isopropyl alcohol, iodine solutions, mercurochrome compositions, merbromin, erythrosine, fluoroscein, fast green, brilliant green, crystal violet, Bismarck brown, gentian violet, basic fuchsin, lissamine blue, coomassie blue, carbolan green, acid red 58, D&C dye red no. 27 and/or D&C dye red no. 28.

9. Indicator liquid container (1) according to one of the preceding claims, in which the indicator liquid container (1) comprises a colour code which indicates which indicator liquid is in the indicator liquid container.

10. Indicator liquid container (1) according to one of the preceding claims, in which the groove (4) is less deep with respect to the plate (2) than the space (28).

11. Indicator liquid container (1) according to one of the preceding claims, in which, with respect to the plate (2), the space (28) is at least 3 mm deeper than the groove (4).

## Patentansprüche

1. Indikatorflüssigkeitsbehälter (1),
- enthaltend Indikatorflüssigkeiten für die Zahnarztpraxis, um Karies oder Zahnbelag anzuzeigen, wobei der Behälter:
- eine Kunststoffplatte (2) mit einer Kammer (3) umfasst, die in ihr eingelassen ist, um eine Indikatorflüssigkeit zu enthalten, und
- einen Abdeckfilm/eine Abdeckfolie (8) umfasst, die an der Kunststoffplatte (2) befestigt werden kann, wobei der Indikatorflüssigkeitsbehälter (1)
- einen kleinen Stab, eine stabförmige Bürste oder einen stabförmigen Applikator (5) umfasst, und
- eine Kerbe (4), die in der Kunststoffplatte (2) zur Unterbringung des kleinen Stabs, der stabförmigen Bürste oder des Applikators (5) vorgesehen ist, in der der kleine Stab, die stabförmige Bürste oder der Applikator (5, 14) in der geschlossenen Position nicht über einen Seitenrand der Kunststoffplatte (2) hinaus reichen,
- wobei ein offenes Medium (6) in der eingelassenen Kammer (3) vorgesehen ist,
- wobei ein ausgesparter Raum (28) um die Kerbe (4) in der Kunststoffplatte (2) vorgesehen ist und dazu geeignet ist, Zugriff für die Spitze eines Fingers und die Spitze eines Daumens oder eines anderen Fingers zu diesem Raum (28) zu gestatten, und
- wobei ein nach unten gerichteter Rand (31) entlang des Außenrands der Kunststoffplatte (2) vorgesehen ist und sich bis zur Tiefe der Aussparungen (28, 29 und 30) oder weiter als diese erstreckt.

2. Indikatorflüssigkeitsbehälter (1) nach Anspruch 1, wobei die stabförmige Bürste, der kleiner Stab oder der Applikator (5, 14) ein Aufnahmeteil (7, 15) umfassen.

3. Indikatorflüssigkeitsbehälter (1) nach Anspruch 2, wobei die stabförmige Bürste, der kleine Stab oder Applikator (5, 14) eine Mikrobürste oder Wattebausch umfassen.

4. Indikatorflüssigkeitsbehälter (1) nach Anspruch 2, wobei die stabförmige Bürste, der kleine Stab oder Applikator (5, 14) ein schwammartiges oder anderes Aufnahmemedium (16) umfassen.

5. Indikatorflüssigkeitsbehälter (1) nach einem der vorhergehenden Ansprüche, wobei die Bodenfläche (17) der eingelassenen Kammer (3) einen Zahn oder eine Nadel (18) umfasst und wobei eine Flüssigkeitsampulle (20) in der Nähe des Zahns oder der Nadel (18) angeordnet ist und sich in oder unter dem offenen Medium (6) befindet.

6. Indikatorflüssigkeitsbehälter (1) nach Anspruch 5, wobei die Nadel oder der Zahn (18) so ausgelegt ist, dass er bzw. sie die Wand der Ampulle (20) durchdringen kann, beispielsweise so dass die Nadel oder der Zahn die Ampulle (20) öffnet, nachdem Druck auf das Aufnahmemedium (6, 16) und/oder die Ampulle (20) ausgeübt wurde.

7. Indikatorflüssigkeitsbehälter (1) nach einem der vorhergehenden Ansprüche, wobei eine Oberfläche (11) auf der Kunststoffplatte (2) vorgesehen ist, auf der die Haftung des Abdeckfilms/der Abdeckfolie (8) stark reduziert ist.

8. Indikatorflüssigkeitsbehälter (1) nach einem der vorhergehenden Ansprüche, wobei die Indikatorflüssigkeit ein oder mehr der folgenden Komponenten umfasst: Rhodamin B oder Säure Rot 52, beispielsweise in einer Glykollösung oder in Isopropylalkohol, Jodlösungen, Mercurochrom-Zusammensetzungen, Merbromin, Erythrosin, Fluoroscein, Echtgrün, Brillantgrün, Kristallviolett, Bismarckbraun, Gentianaviolett, basischem Fuchsin, Lissaminblau, Coomassie-Blau, Carbolan-Grün, Säure Rot 58, D&C Farbstoff Rot Nr. 27 und/oder D&C Farbstoff Rot Nr. 28.

9. Indikatorflüssigkeitsbehälter (1) nach einem der vorhergehenden Ansprüche, wobei der Indikatorflüssigkeitsbehälter (1) einen Farbcode umfasst, der anzeigt, welche Indikatorflüssigkeit sich im Indikatorflüssigkeitsbehälter befindet.

10. Indikatorflüssigkeitsbehälter (1) nach einem der vorhergehenden Ansprüche, wobei die Kerbe (4) bezüglich der Platte (2) weniger tief als der Raum (28) ist.

11. Indikatorflüssigkeitsbehälter (1) nach einem der vorhergehenden Ansprüche, wobei der Raum (28) in Bezug auf die Platte (2) mindestens 3 mm tiefer als die Kerbe (4) ist.

## Revendications

1. Récipient (1) de liquide indicateur
- contenant des liquides indicateurs pour le cabinet dentaire, afin d'indiquer des caries ou une plaque dentaire, dans lequel le récipient :
- comprend une plaque en plastique (2) ayant une chambre (3) en creux dans celle-ci pour contenir un liquide indicateur et
- comprend une couche/une pellicule de recouvrement (8) qui peut être fixée à la plaque en plastique (2), dans lequel le récipient (1) de liquide indicateur
- comprend une petite tige, une brosse en forme de tige ou un applicateur en forme de tige (5) et
- une rainure (4) se trouvant dans la plaque en plastique (2) pour accueillir la petite tige, la brosse en forme de tige ou l'applicateur (5), dans laquelle la petite tige, la brosse en forme de tige ou l'applicateur (5, 14) ne dépassent pas un bord latéral de la plaque en plastique (2) en position fermée,
- dans lequel un milieu ouvert (6) est placé dans la chambre en creux (3),
- dans lequel un espace en creux (28) est prévu autour de la rainure (4) dans la plaque en plastique (2) et est approprié pour permettre un accès au bout d'un doigt et au bout d'un pouce ou d'un autre doigt à cet espace (28), et
- dans lequel un bord dirigé vers le bas (31) est situé le long du bord externe de la plaque en plastique (2) et s'étend aussi loin ou plus loin que la profondeur des renfoncements (28, 29 et 30).

2. Récipient (1) de liquide indicateur selon la revendication 1, dans lequel la brosse en forme de tige, la petite tige ou l'applicateur (5, 14) comprend une partie de réception (7, 15).

3. Récipient (1) de liquide indicateur selon la revendication 2, dans lequel la brosse en forme de tige, la petite tige ou l'applicateur (5, 14) comprend une microbrosse ou un bâtonnet ouaté.

4. Récipient (1) de liquide indicateur selon la revendication 2, dans lequel la brosse en forme de tige, la petite tige ou l'applicateur (5, 14) comprend un support de réception du type éponge ou autre (16).

5. Récipient (1) de liquide indicateur selon l'une quelconque des revendications précédentes, dans lequel la surface inférieure (17) de la chambre en creux (3) comprend une dent ou aiguille (18) et dans lequel une ampoule (20) de liquide est agencée à proximité de la dent ou de l'aiguille (18) et située dans ou sous le support (6) ouvert.

6. Récipient (1) de liquide indicateur selon la revendication 5, dans lequel l'aiguille ou la dent (18) est conçue de façon à pouvoir pénétrer la paroi de l'ampoule (20), par exemple de sorte que l'aiguille ou la dent ouvre l'ampoule (20) après qu'une pression a été exercée sur le support de réception (6, 16) et/ou l'ampoule (20).

7. Récipient (1) de liquide indicateur selon l'une quelconque des revendications précédentes, dans lequel une surface (11) est prévue sur la plaque en plastique (2), sur laquelle l'adhérence de la couche/pellicule de recouvrement (8) est fortement réduite.

8. Récipient (1) de liquide indicateur selon l'une quelconque des revendications précédentes, dans lequel le liquide indicateur comprend un ou plusieurs parmi les constituants suivants : rhodamine B or rouge acide 52 dans, par exemple, une solution glycolique ou dans de l'alcool isopropylique, des solutions d'iode, des compositions de mercurochrome, de la merbromine, de l'érythrosine, de la fluorescéine, du vert solide, du vert brillant, du violet cristallisé, du brun Bismarck, du violet de gentiane, de la fuchsine basique, du bleu lissamine, du bleu de Coomassie, du vert carbolan, du rouge acide 58, du colorant D&C rouge n° 27 et/ou du colorant D&C rouge n° 28.

9. Récipient (1) de liquide indicateur selon l'une quelconque des revendications précédentes, dans lequel le récipient (1) de liquide indicateur comprend un code couleur qui indique le liquide indicateur qui se trouve dans le récipient de liquide indicateur.

10. Récipient (1) de liquide indicateur selon l'une quelconque des revendications précédentes, dans laquelle la rainure (4) est moins profonde par rapport à la plaque (2) que l'espace (28).

11. Récipient (1) de liquide indicateur selon l'une quelconque des revendications précédentes, dans lequel, par rapport à la plaque (2), l'espace (28) est plus profond que la rainure (4) d'au moins 3 mm.
